# EUROPÄISCHE PATENTANMELDUNG

(11) **EP 2 562 686 A1**
(43) Veröffentlichungstag der Anmeldung: **27.02.2013**
(21) Anmeldenummer: 12174547.5
(22) Anmeldetag: 02.07.2012
(51) Int. Cl.: G06K 9/00

(54) **Verfahren zum Bestimmen einer Objektklasse eines Objekts, von dem aus Licht zu einem Fahrzeug ausgesandt und/oder reflektiert wird**

(30) Priorität: 23.08.2011 DE 102011081428
(71) Anmelder: ROBERT BOSCH GMBH, 70442 Stuttgart (DE)
(72) Erfinder: Ehlgen, Tobias, 88212 Ravensburg (DE); Sepp, Wolfgang, 80636 Muenchen (DE)

(57) **Zusammenfassung**

Es wird ein Verfahren (200) zum Bestimmen einer Objektklasse eines Objekts, von dem aus Licht zu einem Fahrzeug ausgesandt und/oder reflektiert wird, vorgeschlagen. Das Verfahren (200) weist einen Schritt des Einlesens (210) eines ersten Helligkeitswerts an einer ersten Bildposition in einem mittels einer ersten Fahrzeugkamera aufgenommenen ersten Bild und eines zweiten Helligkeitswerts an einer zweiten Bildposition in einem mittels einer zweiten Fahrzeugkamera aufgenommenen zweiten Bild auf. Dabei repräsentieren die erste und die zweite Bildposition eine identische, dem Objekt zugehörige Position in einer Umgebung des Fahrzeugs. Das Verfahren (200) weist ferner einen Schritt des Bestimmens (220) der Objektklasse des Objekts basierend auf einem Vergleich unter Verwendung des ersten Helligkeitswerts und des zweiten Helligkeitswerts auf.

## Beschreibung

### Stand der Technik

Die vorliegende Erfindung bezieht sich auf ein Verfahren zum Bestimmen einer Objektklasse eines Objekts, von dem aus Licht zu einem Fahrzeug ausgesandt und/oder reflektiert wird, auf ein Verfahren zur Steuerung einer Lichtaussendung eines Scheinwerfers eines Fahrzeugs, auf eine Vorrichtung, die ausgebildet ist, um die Schritte eines dieser Verfahren durchzuführen, sowie auf ein Computerprogrammprodukt mit Programmcode zur Durchführung eines dieser Verfahren, wenn das Programm auf einer Vorrichtung ausgeführt wird.

Ein Fernlichtassistent kann Fremdfahrzeuge erkennen und automatisch von Fernlicht auf Abblendlicht schalten, falls ein anderes Fahrzeug geblendet wird. Es kommt vor, dass der Fernlichtassistent fälschlicherweise ins Abblendlicht schaltet, obwohl keine anderen Fahrzeuge zu sehen sind. Eine solche Fehldetektion kann zustande kommen, wenn Reflexionen des eigenen Fernlichtes als Fremdfahrzeug fehlinterpretiert werden. Eine Unterscheidung von Reflexionen und Lichtquellen wird z. B. bei Monokamerasystem anhand des Bewegungsverlaufes, der Position im Bild oder der Lichtintensität durchgeführt. Dies kann jedoch häufig zu einer Fehldetektion führen, da aufgrund der Bewegung des Ego-Fahrzeuges (d.h. des Fahrzeugs, in dem die hier beschriebene Auswertung der Reflexionen erfolgt) die Trajektorie von Reflexionsobjekten im Bild sehr denen eines anderen Fahrzeuges in großer Entfernung entspricht. Ähnliches gilt auch für die Position im Bild bzw. die Lichtintensität im Bild.

Die DE 10 2009 042 476 A1 offenbart ein Verfahren zur Bestimmung von Zuständen in der Umgebung eines Kraftfahrzeugs mittels einer Stereokamera.

### Offenbarung der Erfindung

Vor diesem Hintergrund werden mit der vorliegenden Erfindung ein Verfahren zum Bestimmen einer Objektklasse eines Objekts, von dem aus Licht zu einem Fahrzeug ausgesandt und/oder reflektiert wird, ein Verfahren zur Steuerung einer Lichtaussendung eines Scheinwerfers eines Fahrzeugs, eine Vorrichtung, die ausgebildet ist, um die Schritte eines dieser Verfahren durchzuführen, sowie ein Computerprogrammprodukt mit Programmcode zur Durchführung eines dieser Verfahren, wenn das Programm auf einer Vorrichtung ausgeführt wird, gemäß den unabhängigen und nebengeordneten Patentansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zum Bestimmen einer Objektklasse eines Objekts, von dem aus Licht zu einem Fahrzeug ausgesandt und/oder reflektiert wird, wobei das Verfahren folgende Schritte aufweist:

Einlesen eines ersten Helligkeitswerts an einer ersten Bildposition in einem mittels einer ersten Fahrzeugkamera aufgenommenen ersten Bild und eines zweiten Helligkeitswerts an einer zweiten Bildposition in einem mittels einer zweiten Fahrzeugkamera aufgenommenen zweiten Bild, wobei die erste und die zweite Bildposition eine identische, dem Objekt zugeordnete Position in einer Umgebung des Fahrzeugs repräsentieren; und

Bestimmen der Objektklasse des Objekts basierend auf einem Vergleich unter Verwendung des ersten Helligkeitswerts und des zweiten Helligkeitswerts.

Das Objekt kann in einer Umgebung des Fahrzeugs angeordnet sein. Dabei kann das Objekt ein Scheinwerfer eines anderen Fahrzeugs bzw. Fremdfahrzeugs, ein Reflektorelement eines Leitpfostens, eine Glasscheibe eines Gebäudes oder Fahrzeugs, ein Verkehrsschild oder dergleichen sein. Die Objektklasse kann eine Eigenschaft des Objekts repräsentieren, wobei basierend auf der Eigenschaft eine Klassifizierung des Objekts möglich ist. Die der Objektklasse zugrundegelegte Eigenschaft des Objekts kann eine optische Eigenschafte des Objekts aufweisen. Bei dem Licht kann es sich um von dem Objekt erzeugtes und ausgesandtes Licht oder von dem Objekt reflektiertes Licht von einer anderen Lichtquelle, beispielsweise von einem Scheinwerfer des Fahrzeugs oder eines anderen Fahrzeugs, von einer Straßenlaterne oder dergleichen handeln. Bei dem Fahrzeug kann es sich um ein Kraftfahrzeug handeln, insbesondere ein straßengebundenes Kraftfahrzeug, beispielsweise einen Personenkraftwagen, Lastkraftwagen, ein Fahrzeug zum Personentransport oder ein sonstiges Nutzfahrzeug. Die erste Fahrzeugkamera und die zweite Fahrzeugkamera sind räumlich getrennt voneinander an dem Fahrzeug angebracht. Dabei können die erste Fahrzeugkamera und die zweite Fahrzeugkamera Teil einer Stereokameraeinheit sein oder als eigenständige Kameras ausgestaltet sein, die miteinander gekoppelt sind, um eine Stereokamerafunktion darzustellen. Die erste Fahrzeugkamera und die zweite Fahrzeugkamera können eine eigene oder gemeinsam nutzbare Bildverarbeitungselektronik aufweisen. Die erste Bildposition kann zumindest einer Position zumindest eines Bildpunktes des ersten Bilds entsprechen. Die zweite Bildposition kann zumindest einer Position zumindest eines Bildpunktes des zweiten Bilds entsprechen. Somit kann der erste Helligkeitswert eine Helligkeit zumindest eines Bildpunktes des ersten Bildes repräsentieren. Auch kann somit der zweite Helligkeitswert eine Helligkeit zumindest eines Bildpunktes des zweiten Bildes repräsentieren. Bei dem Vergleich des ersten Helligkeitswerts und des zweiten Helligkeitswerts können dieselben auf geeignete Weise kombiniert werden. Beispielsweise kann bei dem Vergleich eine Differenz, eine Summe, ein Differenzbetrag, ein Produkt, ein Quotient, etc. des ersten Helligkeitswerts und des zweiten Helligkeitswerts gebildet werden. Ein Ergebnis des Vergleichs kann mit einer Objektklasse in Zusammenhang gesetzt werden.

Die vorliegende Erfindung schafft ferner ein Verfahren zum Steuern einer Lichtaussendung zumindest eines Scheinwerfers eines Fahrzeugs, wobei das Verfahren folgende Schritte aufweist:

Erzeugen einer Steuerinformation zur Steuerung der Lichtaussendung des zumindest einen Scheinwerfers basierend auf einer nach dem oben genannten Verfahren bestimmten Objektklasse; und

Ansteuern des zumindest einen Scheinwerfers unter Verwendung der Steuerinformation, um die Lichtaussendung des zumindest einen Scheinwerfers zu steuern.

Bei dem zumindest einen Scheinwerfer kann es sich beispielsweise um einen Frontscheinwerfer des Fahrzeugs handeln. Die Lichtaussendung des Scheinwerfers kann hierbei in Stufen oder stufenlos veränderbar sein. Die Lichtaussendung des Scheinwerfers kann dabei hinsichtlich der Abstrahlcharakteristik des Scheinwerfers verändert werden oder beibehalten werden, wenn der zumindest eine Scheinwerfer unter Verwendung der Steuerinformation angesteuert wird. Die Abstrahlcharakteristik kann eine Helligkeit, einen Leuchtwinkel, eine Breite oder Größe des auszuleuchtenden Fahrbahnbereichs vor dem Fahrzeug, eine Leuchthöhe, ein Beleuchtungsmuster, eine Zuschaltung oder Abschaltung von Leuchtmitteln und/oder dergleichen betreffen, die eine Lichtaussendung durch die Scheinwerfer charakterisieren.

Die vorliegende Erfindung schafft ferner eine Vorrichtung, die ausgebildet ist, um die Schritte eines der oben genannten Verfahren durchzuführen bzw. umzusetzen. Insbesondere kann die Vorrichtung Einrichtungen aufweisen, die ausgebildet sind, um die Schritte eines der oben genannten Verfahren auszuführen. Somit schafft die vorliegende Erfindung eine Vorrichtung zum Bestimmen einer Objektklasse eines Objekts, von dem aus Licht zu einem Fahrzeug ausgesandt und/oder reflektiert wird, wobei die Vorrichtung folgende Merkmale aufweist:
eine Schnittstelle zum Einlesen eines ersten Helligkeitswerts an einer ersten Bildposition in einem mittels einer ersten Fahrzeugkamera aufgenommenen ersten Bild und eines zweiten Helligkeitswerts an einer zweiten Bildposition in einem mittels einer zweiten Fahrzeugkamera aufgenommenen zweiten Bild, wobei die erste und die zweite Bildposition eine identische, dem Objekt zugeordnete Position in einer Umgebung des Fahrzeugs repräsentieren; und
eine Einheit zum Bestimmen der Objektklasse des Objekts basierend auf einem Vergleich unter Verwendung des ersten Helligkeitswerts und des zweiten Helligkeitswerts.

Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät bzw. Steuergerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung eines der Verfahrens nach einem der vorstehend beschriebenen Ausführungsformen verwendet wird, wenn das Programm auf einer Vorrichtung ausgeführt wird.

Die Erfindung basiert auf der Erkenntnis, dass unter Verwendung von Helligkeitswerten von Bildpositionen in zwei mittels zweier Kameras aufgenommen Bildern eine Objektklasse eines Objekts in der Umgebung eines Fahrzeugs vorteilhaft ermittelt werden kann. So können beispielsweise mittels eines Stereokamerasystems Objekte bzw. Lichtobjekte in der Fahrzeugumgebung aus verschiedenen Blickwinkeln beobachtet werden, wobei zum Beispiel in den Bildern eine Lichtintensität bei Reflexion, beispielsweise hervorgerufen durch Leitpfosten, stärker vom Blickwinkel abhängig sein kann als bei Lichtquellen, beispielsweise hervorgerufen durch Scheinwerfer.

Ein Vorteil der vorliegenden Erfindung liegt darin, dass hierbei Bilder einer oftmals bereits serienmäßig in Fahrzeugen verbaute Stereokameraeinheit bzw. eines Stereosystems genutzt werden können, um Fehldetektionen hinsichtlich einer Objektklasse zu minimieren. Somit kann ein Objekt mit größerer Genauigkeit sowie Zuverlässigkeit klassifiziert werden, wobei Aufwand und Platzbedarf gering gehalten werden können. Basierend auf einer korrekt bestimmten Objektklasse können beispielsweise auch verschiedene Fahrzeugfunktionen mit zuverlässigeren Eingangsgrößen versorgt werden bzw. sind vorteilhafte Anwendungen möglich. Zum Beispiel kann die korrekt bestimmte Objektklasse bei einer stereobasierten Fernlichtsteuerung eine Vermeidung von Fehlabblendungen bewirken. Insbesondere kann hierbei vermieden werden, dass ein Fernlichtassistent zum Beispiel fälschlicherweise ins Abblendlicht schaltet, obwohl sich keine anderen Fahrzeuge im Bild bzw. in der Umgebung des Fahrzeugs befinden, sondern nur Lichtreflexionen empfangen werden.

Bei dem Verfahren zum Bestimmen einer Objektklasse kann im Schritt des Bestimmens das Objekt in die Objektklasse der reflektierenden Objekte klassiert wird, wenn ein Wert einer Verknüpfung des ersten Helligkeitswerts mit dem zweiten Helligkeitswert größer als ein Schwellwert ist.. Hierbei kann beispielsweise ein aus dem ersten Helligkeitswert und dem zweiten Helligkeitswert gebildetes Vergleichsergebnis, beispielsweise ein Differenzbetrag oder dergleichen, einen Wert eines Helligkeitsunterschieds darstellen, der ein Vorliegen eines reflektierenden Objektes repräsentiert. Der Schwellwert kann einem Wert eines Helligkeitsunterschieds entsprechenden, bei dessen Überschreitung ein Objekt als reflektierendes Objekt erkannt oder gewertet wird. Der Schwellwert kann geeignet gewählt sein, um eine sinnvolle Objektklassifizierung zu ermöglichen. Der Schwellwert kann einen Toleranzbereich hinsichtlich der Helligkeitswerte berücksichtigen. Der Toleranzbereich kann beispielsweise 1%, 2%, 3%, 5% oder 10 % eines der Helligkeitswerte betragen. Eine solche Schwellwertentscheidung bietet den Vorteil, dass eine Treffsicherheit bei der Objektklassifizierung erhöht und somit eine korrekte Objektklassifizierung ermöglicht wird.

Dabei kann im Schritt des Bestimmens das Objekt in die Objektklasse der selbstleuchtenden Objekte klassiert wird, wenn ein Wert einer Verknüpfung des ersten Helligkeitswerts mit dem zweiten Helligkeitswert kleiner als ein Schwellwert ist.. Hierbei kann beispielsweise ein aus dem ersten Helligkeitswert und dem zweiten Helligkeitswert gebildetes Vergleichsergebnis, beispielsweise ein Differenzbetrag oder dergleichen, einen Wert eines Helligkeitsunterschieds darstellen, der ein Vorliegen eines selbstleuchtenden Objektes repräsentiert. Der Schwellwert kann einem Wert eines Helligkeitsunterschieds entsprechenden, bei dessen Unterschreitung ein selbstleuchtendes Objekt vorliegt. Der Schwellwert kann geeignet gewählt sein, um eine sinnvolle Objektklassifizierung zu ermöglichen. Der Schwellwert kann einen Toleranzbereich hinsichtlich der Helligkeitswerte berücksichtigen, wie er beispielsweise vorstehend bereits genannt wurde. Eine solche Ausführungsform bietet ebenfalls den Vorteil, dass eine Treffsicherheit bei der Objektklassifizierung erhöht und somit eine korrekte Objektklassifizierung ermöglicht wird.

Auch kann einen Schritt des Erkennens der ersten Bildposition basierend auf einem Vergleich von Parametern mehrerer Bildpunkte in einem ersten Bildbereich in dem ersten Bild und des Erkennens der zweiten Bildposition basierend auf einem Vergleich von Parametern mehrerer Bildpunkte in einem zweiten Bildbereich in dem zweiten Bild vorgesehen sein. Hierdurch kann beispielsweise zumindest ein Bildpunkt, dessen Helligkeitswert ein Maximum, relatives Maximum oder dergleichen in dem Bild darstellt, als die Bildposition erkannt werden. Eine solche Ausführungsform bietet den Vorteil, dass die Bilder somit analysiert werden können, um für die Objektklassifizierung geeignete Bildpositionen zu erkennen. Dabei können beispielsweise gegebenenfalls auch Bildpositionen herausgefiltert werden, die unerwünschte Bereiche der Umgebung des Fahrzeugs repräsentieren. So können beispielsweise Straßenlaternen von der Objektklassifizierung ausgeschlossen werden.

Ferner kann ein Schritt des Überprüfens vorgesehen sein, ob die erste und die zweite Bildposition eine identische, dem Objekt zugeordnete Position in einer Umgebung des Fahrzeugs repräsentieren. Dabei braucht die erste Bildposition in einem Bildraster, Koordinatensystem oder dergleichen in dem ersten Bild nicht an der gleichen Stelle angeordnet sein wie die zweite Position in dem zweiten Bild. Denn die erste Fahrzeugkamera und die zweite Fahrzeugkamera können zumindest teilweise überlappende Ausschnitte der Umgebung des Fahrzeugs abbilden. Somit können im Schritt des Überprüfens die zusammengehörigen Bildpositionen ermittelt werden, die dem gleichen Objekt in der Umgebung des Fahrzeugs entsprechen bzw. zugeordnet sind. Eine solche Ausführungsform bietet den Vorteil, dass sichergestellt werden kann, dass die erste Bildposition und die zweite Bildposition beide dem gleichen Objekt in der Umgebung des Fahrzeugs zugeordnet sind.

Des Weiteren kann ein Schritt des Bestimmens des ersten Helligkeitswerts unter Verwendung des ersten Bilds und des zweiten Helligkeitswerts unter Verwendung des zweiten Bilds vorgesehen sein. Dabei kann erste Helligkeitswert auch einen Mittelwert von Helligkeiten mehrerer Bildpunkte des ersten Bilds repräsentieren. Der zweite Helligkeitswert kann auch einen Mittelwert von Helligkeiten mehrerer Bildpunkte des zweiten Bilds repräsentieren. Eine solche Ausführungsform bietet den Vorteil, dass aus jedem Bild ein korrekter Helligkeitswert für die Objektklassifizierung bestimmt und bereitgestellt wird.

Bei dem Verfahren zum Steuern der Lichtaussendung kann im Schritt des Ansteuerns die Lichtaussendung des zumindest einen Scheinwerfers von einer ersten Abstrahlcharakteristik zu einer zweiten Abstrahlcharakteristik verändert werden, wenn die Steuerinformation einen Hinweis auf ein als selbstleuchtend klassiertes oder bestimmtes Objekt gibt. Es kann die Lichtaussendung des zumindest einen Scheinwerfers bei der ersten Abstrahlcharakteristik beibehalten werden, wenn die Steuerinformation einen Hinweis auf ein als reflektierend bestimmtes Objekt gibt. Die Steuerinformation kann dabei als ein Steuersignal betrachtet werden. Die erste Abstrahlcharakteristik kann beispielsweise einem Fernlicht entsprechen oder ähnlich sein. Die zweite Abstrahlcharakteristik kann beispielsweise einem Abblendlicht entsprechen oder ähnlich sein. Eine solche Ausführungsform bietet den Vorteil, dass zum Beispiel ein unnötiges Abblenden bei reflektierenden Objekten vermieden werden kann. Wenn hingegen ein selbstleuchtendes Objekt vorliegt, kann zuverlässig z. B. abgeblendet werden und somit eine Blendung anderer Verkehrsteilnehmer wirksam vermieden werden.

Die Erfindung wird anhand der beigefügten Zeichnungen beispielhaft näher erläutert. Es zeigen:
- Fig. 1: eine schematische Darstellung eines Fahrzeugs mit einer Steuervorrichtung gemäß einem Ausführungsbeispiel der vorliegenden Erfindung;
- Figuren 2 und 3: Ablaufdiagramme von Verfahren gemäß Ausführungsbeispielen der vorliegenden Erfindung;
- Fig. 4: eine Darstellung eines Objekts zu einem Zeitpunkt während einer Objektklassifizierung gemäß einem Ausführungsbeispiel der vorliegenden Erfindung ; und
- Fig. 5: ein Ablaufdiagramm eines Algorithmus gemäß einem Ausführungsbeispiel der vorliegenden Erfindung.

Gleiche oder ähnliche Elemente können in den Figuren durch gleiche oder ähnliche Bezugszeichen versehen sein, wobei auf eine wiederholte Beschreibung verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung eventuell unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal/Schritt und einem zweiten Merkmal/Schritt, so kann dies so gelesen werden, dass das Ausführungsbeispiel gemäß einer Ausführungsform sowohl das erste Merkmal / den ersten Schritt als auch das zweite Merkmal /den zweiten Schritt und gemäß einer weiteren Ausführungsform entweder nur das erste Merkmal /Schritt oder nur das zweite Merkmal /Schritt aufweist.

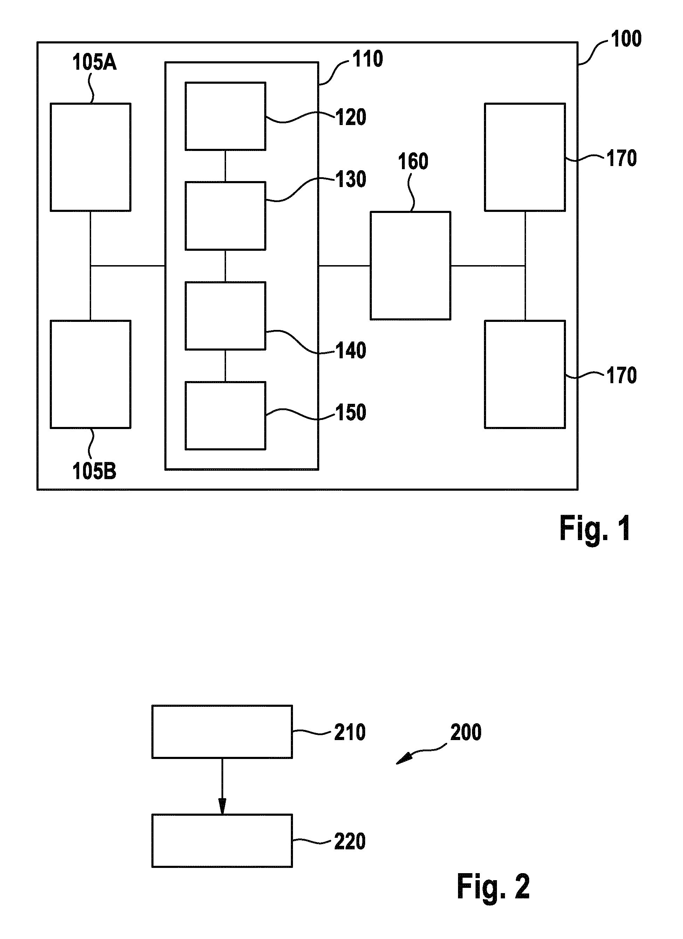

Fig. 1 zeigt eine schematische Darstellung eines Fahrzeugs 100 mit einer Steuervorrichtung gemäß einem Ausführungsbeispiel der vorliegenden Erfindung. Das Fahrzeug 100 weist eine erste Fahrzeugkamera 105A, eine zweite Fahrzeugkamera 105B, eine Steuervorrichtung 110 mit einer Einleseeinrichtung 120, einer Bestimmungseinrichtung 130, einer Erzeugungseinrichtung 140 sowie einer Ansteuereinrichtung 150, ein Ansteuergerät 160 und zwei Scheinwerfer 170 auf. Die erste Fahrzeugkamera 105A und die zweite Fahrzeugkamera 105B sind mit der Steuervorrichtung 110 über eine Kommunikationsschnittstelle, beispielsweise jeweils über zumindest eine Signalleitung verbunden. Das Ansteuergerät 160 ist mit der Steuervorrichtung 110 über eine Kommunikationsschnittstelle, beispielsweise jeweils über zumindest eine Signalleitung, verbunden. Somit ist die Steuervorrichtung 110 zwischen die Fahrzeugkameras 105A sowie 105B und das Ansteuergerät 160 geschaltet. Die Scheinwerfer 170 sind mit dem Ansteuergerät 160 über eine Kommunikationsschnittstelle, beispielsweise über zumindest eine Signalleitung verbunden. Somit ist das Ansteuergerät 160 zwischen die Steuervorrichtung 110 und die Scheinwerfer 170 geschaltet. Auch wenn es in Fig. 1 so nicht dargestellt ist, kann das Ansteuergerät 160 auch ein Teil der Steuervorrichtung 110 sein oder kann die Steuervorrichtung 110 auch ein Teil des Ansteuergerätes 160 sein. Ferner können die Fahrzeugkameras 105A sowie 150B Teil einer Stereokameraeinheit sein, die in Fig. 1 nicht gezeigt ist.

Die erste Fahrzeugkamera 105A kann eine Bildverarbeitungselektronik aufweisen. Die zweite Fahrzeugkamera 105B kann ebenfalls eine Bildverarbeitungselektronik aufweisen. Alternativ oder zusätzlich können die Fahrzeugkameras 105A sowie 105B eine gemeinsame Bildverarbeitungselektronik (nicht gezeigt) aufweisen. Die Fahrzeugkameras 105A sowie 105B sind ausgebildet, um jeweils ein Bild einer Umgebung des Fahrzeugs 100, beispielsweise in Fahrtrichtung vor dem Fahrzeug, aufzunehmen und in Form einer Bildinformation bzw. eines Bildsignals an die Steuervorrichtung 110 auszugeben.

Die Steuervorrichtung 110 ist ausgebildet, um die Bildinformation bzw. das Bildsignal von der ersten Fahrzeugkamera 105A und die Bildinformation bzw. das Bildsignal von der zweiten Fahrzeugkamera 105B zu empfangen. Dabei können die Bildinformationen bzw. Bildsignale einen ersten Helligkeitswert an einer ersten Bildposition in dem mittels der ersten Fahrzeugkamera 105A aufgenommenen ersten Bild und einen zweiten Helligkeitswert an einer zweiten Bildposition in dem mittels der zweiten Fahrzeugkamera 105B aufgenommenen zweiten Bild repräsentieren. Dabei repräsentieren die erste und die zweite Bildposition eine identische, dem Objekt zugehörige Position in einer Umgebung des Fahrzeugs 100. Alternativ können die Helligkeitswerte und/oder die Bildpositionen auch mittels geeigneter Einrichtungen (nicht gezeigt) der Steuervorrichtung 110 bestimmt bzw. erkannt werden. Die Steuervorrichtung 110 weist die Einleseeinrichtung 120, die Bestimmungseinrichtung 130, die Erzeugungseinrichtung 140 sowie die Ansteuereinrichtung 150 auf. Die Steuervorrichtung 110 ist ausgebildet, um eine Bestimmung einer Objektklasse eines Objekts, von dem aus Licht zu einem Fahrzeug 100 ausgesandt und/oder reflektiert wird, sowie eine Steuerung einer Lichtaussendung der Scheinwerfer 170 des Fahrzeugs 100 durchzuführen.

Die Einleseeinrichtung 120 ist ausgebildet, um die Bildinformationen bzw. die Bildsignale von den Fahrzeugkameras 105A und 105B zu empfangen. Die Einleseeinrichtung 120 ist ausgebildet, um den ersten Helligkeitswert an der ersten Bildposition in dem mittels der ersten Fahrzeugkamera 105A aufgenommenen ersten Bild und den zweiten Helligkeitswert an der zweiten Bildposition in dem mittels der zweiten Fahrzeugkamera 105B aufgenommenen zweiten Bild einzulesen. Dabei repräsentieren die erste und die zweite Bildposition eine identische, dem Objekt zugehörige Position in der Umgebung des Fahrzeugs 100. Die Einleseeinrichtung 120 kann eine Information über die eingelesenen Helligkeitswerte an die Bestimmungseinrichtung 130 ausgeben.

Die Bestimmungseinrichtung 130 ist ausgebildet, um die Information über die eingelesenen Helligkeitswerte von der Einleseeinrichtung 120 zu empfangen. Die Bestimmungseinrichtung 130 ist ausgebildet, um eine Objektklasse des Objekts basierend auf einem Vergleich des ersten Helligkeitswerts und des zweiten Helligkeitswerts zu bestimmen. Weichen die Helligkeitswerte um mehr als ein vorgegebenes Maß voneinander ab, kann die Bestimmungseinrichtung 130 das Objekt in die Objektklasse der reflektierenden Objekte klassiert werden . Weichen die Helligkeitswerte um weniger als das vorgegebene Maß voneinander ab, kann die Bestimmungseinrichtung 130 das Objekt in die Objektklasse der selbstleuchtenden Objekte klassiert werden. Die Bestimmungseinrichtung 130 ist ausgebildet, um eine Information über die bestimmte Objektklasse an die Erzeugungseinrichtung 140 auszugeben.

Die Erzeugungseinrichtung 140 ist ausgebildet, um die Information über die bestimmte Objektklasse von der Bestimmungseinrichtung 130 zu empfangen. Die Erzeugungseinrichtung 140 ist auch ausgebildet, um basierend auf der bestimmten Objektklasse eine Steuerinformation zur Steuerung der Lichtaussendung des zumindest einen Scheinwerfers zu erzeugen. Die Erzeugungseinrichtung 140 ist ausgebildet, um die Steuerinformation an die Ansteuereinrichtung 150 auszugeben.

Die Ansteuereinrichtung 150 ist ausgebildet, um die Steuerinformation von der Erzeugungseinrichtung 140 zu empfangen. Die Ansteuereinrichtung 150 ist ausgebildet, um unter Verwendung der Steuerinformation die Scheinwerfer 170 anzusteuern, um die Lichtaussendung des zumindest einen Scheinwerfers zu steuern. Die Ansteuereinrichtung 150 kann auch ausgebildet sein, um eine Ansteuerinformation an das Ansteuergerät 160 auszugeben.

Das Ansteuergerät 160 ist ausgebildet, um die Ansteuerinformation von der Ansteuereinrichtung 150 der Steuervorrichtung 110 zu empfangen. Das Ansteuergerät 160 ist auch ausgebildet, um ein Ansteuersignal zur Steuerung der Scheinwerfer 170 zu erzeugen. Das Ansteuergerät 160 kann bei der Erzeugung des Ansteuersignals die Ansteuerinformation von der Steuervorrichtung 110 berücksichtigen bzw. verwenden. Das Ansteuersignal kann somit die Ansteuerinformation beinhalten. Das Ansteuersignal kann zusätzlich zu der Ansteuergerät Information noch weitere Steuerinformationen anderer Fahrzeugeinheiten beinhalten bzw. auf demselben basieren. Das Ansteuergerät 160 ist ausgebildet, um das Ansteuersignal an die Scheinwerfer 170 auszugeben.

Die Scheinwerfer 170 können das Ansteuersignal von dem Ansteuergerät 160 empfangen. Die Ansteuerinformation, die in dem Ansteuersignal berücksichtigt ist, kann bewirken, dass die Lichtaussendung an eine bestimmte Objektklasse eines Objekts in der Umgebung des Fahrzeugs 100 angepasst wird.

Fig. 2 zeigt ein Ablaufdiagramm eines Verfahrens 200 zum Bestimmen einer Objektklasse eines Objekts, von dem aus Licht zu einem Fahrzeug ausgesandt und/oder reflektiert wird, gemäß einem Ausführungsbeispiel der vorliegenden Erfindung. Das Verfahren 200 weist einen Schritt des Einlesens 210 eines ersten Helligkeitswerts an einer ersten Bildposition in einem mittels einer ersten Fahrzeugkamera aufgenommenen ersten Bild und eines zweiten Helligkeitswerts an einer zweiten Bildposition in einem mittels einer zweiten Fahrzeugkamera aufgenommenen zweiten Bild auf. Dabei repräsentieren die erste und die zweite Bildposition eine identische, dem Objekt zugeordnete Position in einer Umgebung des Fahrzeugs. Das Verfahren 200 weist ferner einen Schritt des Bestimmens 220 der Objektklasse des Objekts basierend auf einem Vergleich unter Verwendung des ersten Helligkeitswerts und des zweiten Helligkeitswerts auf. Das Verfahren 200 kann in Verbindung mit einer Vorrichtung, wie beispielsweise der Steuervorrichtung aus Fig. 1, vorteilhaft ausgeführt werden. Somit kann die Steuervorrichtung bzw. können Einrichtungen der Steuervorrichtung aus Fig. 1 ausgebildet sein, um die Schritte des Verfahrens 200 durchzuführen.

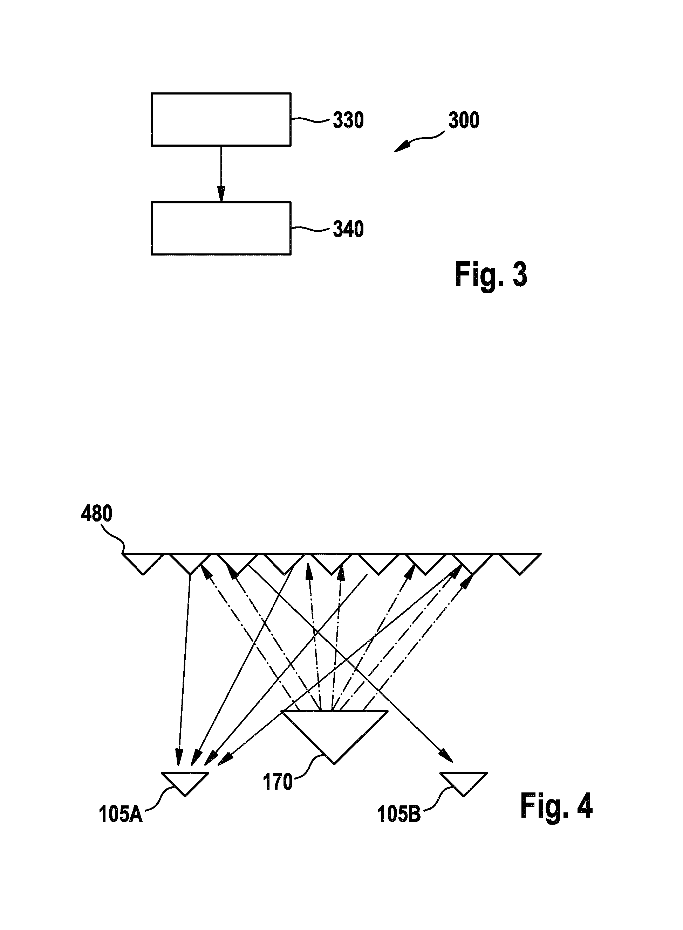

Fig. 3 zeigt ein Ablaufdiagramm eines Verfahrens 300 zum Steuern einer Lichtaussendung zumindest eines Scheinwerfers eines Fahrzeugs, gemäß einem Ausführungsbeispiel der vorliegenden Erfindung. Das Verfahren 300 weist einen Schritt des Erzeugens 330 einer Steuerinformation zur Steuerung der Lichtaussendung des zumindest einen Scheinwerfers basierend auf einer beispielsweise nach dem Verfahren gemäß dem in Fig. 2 dargestellten Ausführungsbeispiel bestimmten Objektklasse auf. Das Verfahren 300 weist ferner einen Schritt des Ansteuerns 340 des zumindest einen Scheinwerfers unter Verwendung der Steuerinformation auf, um die Lichtaussendung des zumindest einen Scheinwerfers zu steuern. Das Verfahren 300 kann in Verbindung mit Das Verfahren 300 kann in Verbindung mit einer Vorrichtung, wie beispielsweise der Steuervorrichtung aus Fig. 1, vorteilhaft ausgeführt werden. Somit kann die Steuervorrichtung bzw. können Einrichtungen der Steuervorrichtung aus Fig. 1 ausgebildet sein, um die Schritte des Verfahrens 300 durchzuführen.

Fig. 4 zeigt eine Darstellung eines Objekts zu einem Zeitpunkt während einer Objektklassifizierung gemäß einem Ausführungsbeispiel der vorliegenden Erfindung. Gezeigt sind eine erste Fahrzeugkamera 105A, eine zweite Fahrzeugkamera 105B, ein Scheinwerfer 170 und ein Objekt 480. Die erste Fahrzeugkamera 105A, die zweite Fahrzeugkamera 105B und der Scheinwerfer 170 können Teil eines Fahrzeugs, wie beispielsweise des Fahrzeugs aus Fig. 1 sein. Die erste Fahrzeugkamera 105A und die zweite Fahrzeugkamera 105B können dabei Teil einer Stereo-Kamera bzw. einer Stereokameraeinheit sein. Bei dem Scheinwerfer 170 kann es sich somit um einen Fahrzeugscheinwerfer und insbesondere um einen Frontscheinwerfer handeln. Bei dem Objekt 480 kann es sich beispielsweise um einen Reflektor an einem Leitpfosten handeln. Der Scheinwerfer 170 beleuchtet das Objekt 480. Somit fallen Lichtstrahlen von durch den Scheinwerfer 170 ausgesendetem Licht auf eine reflektierende Oberfläche des Objekts 480. Die Lichtstrahlen des ausgesendeten Lichts sind als Pfeile mit zu dem Objekt 480 weisenden Pfeilspitzen in Fig. 4 dargestellt. Die reflektierende Oberfläche des Objekts 480 ist in Fig. 4 in einem Querschnitt gezeigt und weist ein gezacktes Profil mit spitz zulaufenden Vorsprüngen auf. Die reflektierende Oberfläche des Objekts 480 könnte jedoch auch ein anderes Querschnittsprofil aufweisen. Die reflektierende Oberfläche des Objekts 480 reflektiert das von dem Scheinwerfer 170 ausgesandte Licht. Ein Teil des Lichts wird zu der ersten Fahrzeugkamera 105A und der zweiten Fahrzeugkamera 105B reflektiert. Aufgrund des Querschnittsprofils und des Einfallswinkels des Lichts an der reflektierenden Oberfläche des Objekts empfangen die erste Fahrzeugkamera 105A und der zweite Fahrzeugkamera 105B eine unterschiedliche Lichtmenge, Lichtintensität, Helligkeit, etc. des reflektierten Lichts. Lichtstrahlen des reflektierten Lichts sind als Pfeile mit zu den Fahrzeugkameras 105A und 105B weisenden Pfeilspitzen in Fig. 4 gezeigt. Auf der Basis der empfangenen Lichtmengen, Lichtintensitäten, Helligkeiten, etc. des reflektierten Lichts können beispielsweise das Verfahren aus Fig. 2 und gegebenenfalls zusätzlich das Verfahren aus Fig. 3 oder weitere Anwendungen vorteilhaft ausgeführt werden.

Gemäß dem in Fig. 4 gezeigten Ausführungsbeispiel werden die Eigenschaften des Reflektors 480, der stark unterschiedlich streuend ist, genutzt, um diesen als reflektierend zu klassifizieren. Aufgrund der Struktur des Reflektors 480 an dem Leitpfosten gelangt eine unterschiedliche Menge an reflektiertem Licht zu den einzelnen Kameras 105A und 105B des Stereosystems. Dieser Unterschied kann nun bestimmt werden und zur Bestimmung, ob es sich um die Reflexion eines Leitpfostens handelt oder nicht, verwendet werden. Im vorliegenden Fall in Fig. 4 kann das Verfahren aus Fig. 2 bestimmen, dass die Objektklasse des Objekts, d. h. des Reflektors, reflektierend ist. Falls es sich nicht um eine Reflexion sondern um eine Lichtquelle handeln würde, z. B. Frontlichter eines anderen Fahrzeuges, so wäre das in den beiden Kameras 105A und 105B ankomme Licht innerhalb eines Toleranzbereichs gleich stark und damit keine ausreichend große, auf ein Objekt aus der Objektklasse für reflektierende Objekte hinweisende Differenz vorhanden.

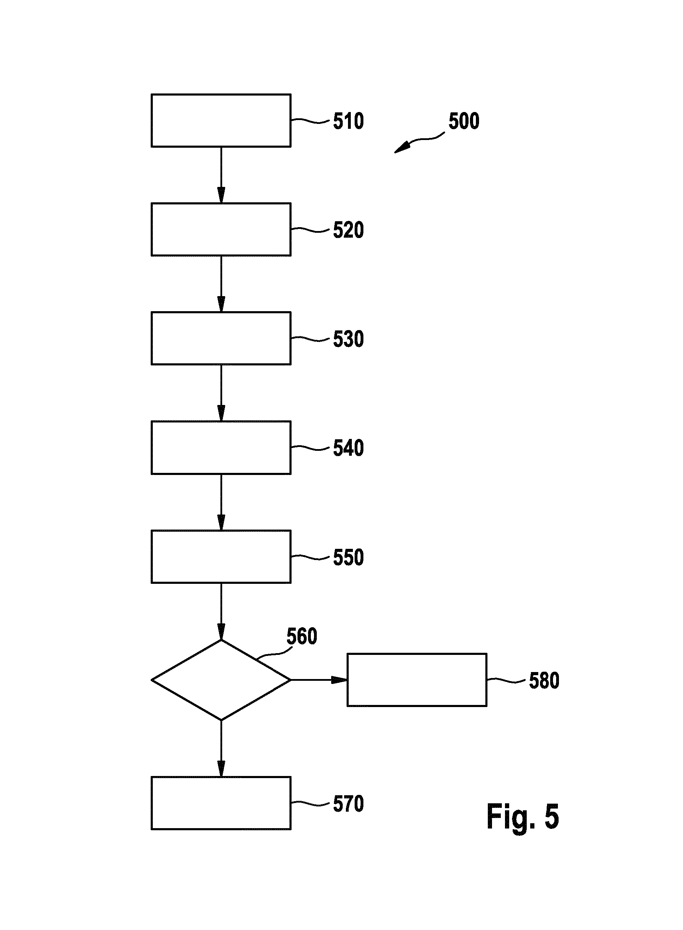

Fig. 5 zeigt ein Ablaufdiagramm eines Algorithmus 500 zum Bestimmen einer Objektklasse eines Objekts, von dem aus Licht zu einem Fahrzeug ausgesandt und/oder reflektiert wird, gemäß einem Ausführungsbeispiel der vorliegenden Erfindung. In einem ersten Schritt 510 werden helle Bildbereiche bzw. Hell-Spots in einem ersten Bild detektiert. In einen weiteren Schritt 520 (der pauch parallel zum ersten Schritt 510 ausgeführt werden kann) werden helle Bildbereiche bzw. Hell-Spots in einem zweiten Bild detektiert. In einem weiteren Schritt 530 werden zusammengehörige Bildbereiche bzw. Spots in dem ersten Bild und dem zweiten Bild ermittelt. In einem weiteren Schritt 540 wird ein erster Helligkeitswert bzw. eine erste Helligkeit H1 in einem Bildbereich bzw. Spot in dem ersten Bild bestimmt. In einem weiteren Schritt 550 wird ein zweiter Helligkeitswert bzw. eine zweite Helligkeit H2 in einem Bildbereich bzw. Spot in dem zweiten Bild bestimmt. In einem anschließenden Schritt 560 wird auf der Basis eines Vergleichs der ersten Helligkeit H1 und der zweite Helligkeit H2 eine Schwellwertentscheidung vorgenommen, die z. B. auf der Gleichung

### |H1 - H2| > Schwellwert

basieren kann. In einem weiteren Schritt 570 wird aufgrund eines ersten Ergebnisses der Schwellwertentscheidung gefolgert, dass es sich bei dem Objekt um einen Reflektor handelt. In einem anderen Schritt 580 wird aufgrund eines von dem ersten Ergebnis verschiedenen zweiten Ergebnisses der Schwellwertentscheidung gefolgert, dass es sich bei dem Objekt um ein Lichtobjekt handelt, d.h. ein Objekt, das selbstleuchtend ist. Der Algorithmus 500 kann in Verbindung mit einer Vorrichtung, wie beispielsweise der Steuervorrichtung aus Fig. 1, bzw. in Verbindung mit einem Verfahren, wie beispielsweise dem Verfahren aus Fig. 2, vorteilhaft ausgeführt werden. Zudem kann der Algorithmus 500 zumindest eine Eingangsgröße für ein Verfahren, wie beispielsweise das Verfahren aus Fig. 3, bereitstellen.

## Patentansprüche

1. Verfahren (200) zum Bestimmen einer Objektklasse eines Objekts (480), von dem aus Licht zu einem Fahrzeug (100) ausgesandt und/oder reflektiert wird, wobei das Verfahren folgende Schritte aufweist:
Einlesen (210) eines ersten Helligkeitswerts an einer ersten Bildposition in einem mittels einer ersten Fahrzeugkamera (105A) aufgenommenen ersten Bild und eines zweiten Helligkeitswerts an einer zweiten Bildposition in einem mittels einer zweiten Fahrzeugkamera (105B) aufgenommenen zweiten Bild, wobei die erste und die zweite Bildposition eine identische, dem Objekt (480) zugeordnete Position in einer Umgebung des Fahrzeugs (100) repräsentieren; und
Bestimmen (220) der Objektklasse des Objekts (480) basierend auf einem Vergleich unter Verwendung des ersten Helligkeitswerts und des zweiten Helligkeitswerts.

2. Verfahren (200) gemäß Anspruch 1, **dadurch gekennzeichnet, dass** im Schritt des Bestimmens (220) das Objekt (480) in die Objektklasse der reflektierenden Objekte klassiert wird, wenn ein Wert einer Verknüpfung des ersten Helligkeitswerts mit dem zweiten Helligkeitswert größer als ein Schwellwert ist.

3. Verfahren (200) gemäß einem der vorangegangenen Ansprüche, **dadurch gekennzeichnet, dass** im Schritt des Bestimmens (220) das Objekt (480) in die Objektklasse von selbstleuchtenden Objekten (480) klassiert wird, wenn ein Wert einer Verknüpfung des ersten Helligkeitswerts mit dem zweiten Helligkeitswert kleiner als ein Schwellwert ist.

4. Verfahren (200) gemäß einem der vorangegangenen Ansprüche, **gekennzeichnet durch** einen Schritt des Erkennens der ersten Bildposition basierend auf einem Vergleich von Parametern mehrerer Bildpunkte in einem ersten Bildbereich in dem ersten Bild und des Erkennens der zweiten Bildposition basierend auf einem Vergleich von Parametern mehrerer Bildpunkte in einem zweiten Bildbereich in dem zweiten Bild.

5. Verfahren (200) gemäß einem der vorangegangenen Ansprüche, **gekennzeichnet durch** einen Schritt des Überprüfens, ob die erste und die zweite Bildposition eine identische, dem Objekt (480) zugeordnete Position in einer Umgebung des Fahrzeugs (100) repräsentieren.

6. Verfahren (300) zum Steuern einer Lichtaussendung zumindest eines Scheinwerfers (170) eines Fahrzeugs (100), wobei das Verfahren folgende Schritte aufweist:
Erzeugen (330) einer Steuerinformation zur Steuerung der Lichtaussendung des zumindest einen Scheinwerfers (170) basierend auf einer nach dem Verfahren (200) gemäß einem der Ansprüche 1 bis 5 bestimmten Objektklasse; und
Ansteuern (340) des zumindest einen Scheinwerfers (170) unter Verwendung der Steuerinformation, um die Lichtaussendung des zumindest einen Scheinwerfers (170) zu steuern.

7. Verfahren (300) gemäß Anspruch 6, **dadurch gekennzeichnet, dass** im Schritt des Ansteuerns (340) die Lichtaussendung des zumindest einen Scheinwerfers (170) von einer ersten Abstrahlcharakteristik zu einer zweiten Abstrahlcharakteristik verändert wird, wenn die Steuerinformation einen Hinweis auf ein als selbstleuchtend bestimmtes Objekt gibt, und/oder die Lichtaussendung des zumindest einen Scheinwerfers (170) bei der ersten Abstrahlcharakteristik beibehalten wird, wenn die Steuerinformation einen Hinweis auf ein als reflektierend bestimmtes Objekt gibt.

8. Vorrichtung (110), die ausgebildet ist, um die Schritte eines der Verfahren (200; 300) gemäß einem der Ansprüche 1 bis 7 durchzuführen.

9. Computerprogrammprodukt mit Programmcode zur Durchführung eines der Verfahren (200; 300) nach einem der Ansprüche 1 bis 7, wenn das Programm auf einer Vorrichtung (110) ausgeführt wird.
